# EUROPEAN PATENT APPLICATION

(11) **EP 0 771 099 A2**
(43) Date of publication of application: **02.05.1997**
(21) Application number: 96114629.7
(22) Date of filing: 12.09.1996
(51) Int. Cl.: H04L 29/06

(54) **Distributed multimedia service system**

(30) Priority: 12.09.1995 JP 234431/95
(71) Applicant: KABUSHIKI KAISHA TOSHIBA, Kawasaki-shi, Kanagawa-ken 210 (JP)
(72) Inventor: Asano, Shigehiro, Kawasaki-shi, Kanagawa-ken (JP)
(74) Representative: Zangs, Rainer E., Dipl.-Ing.

(57) **Abstract**

A scheme for providing multimedia data in a distributed multimedia service system, capable of reducing a required bandwidth of the network and providing multimedia data to many users simultaneously. In a distributed multimedia service system in which a plurality of client devices are interconnected through a network and connected with a plurality of terminals for requesting and reproducing multimedia data, multimedia data obtained at each client device through the network in response to a request is cached into a client cache of each client device, in a unit of data to be continuously reproduced together. When a number of the client devices are grouped together to form a cluster in the system, multimedia data which is obtained at each client device belonging to the cluster through the network in response to a request and allocated to each client device within the cluster can also be cached into a cluster cache of each client device, in a unit of data to be continuously reproduced together.

## Description

### BACKGROUND OF THE INVENTION

### Field of the Invention

The present invention relates to a distributed multimedia service system using a scheme for providing multimedia data in which multimedia data are to be continuously provided to users by client devices connected with a network.

### Description of the Background Art

A distributed multimedia service system is a network system having a structure in which a plurality of client devices are connected by a network and an arbitrary number of user terminals are connected with each client device, where each client device provides a user with a series of multimedia data to be continuously reproduced at a user terminal such as video files. There are basically two types of a scheme for storing and managing multimedia data in such a system, including a scheme for connecting a central multimedia server in the network, and a scheme for distributedly storing multimedia data at client devices without connecting a central multimedia server.

Regardless of which scheme for storing and managing multimedia data is adopted, the client device is usually equipped with a storage having a certain capacity. When data requested by a user is present in the storage within the client device, that data in the storage within the client device is provided by this client device to the requesting user for reproduction. On the other hand, when requested data is not present in the storage within the client device, a request is issued to the other client device or a central multimedia server through the network, such that requested data is transferred through the network to that client device which issued a request, and then provided by this client device to the requesting user for reproduction. In this manner, it is expected that a faster response since a user enters a request until a reproduction starts can be realized in a case where requested data is present in the storage within the client device.

However, in a conventional distributed multimedia service system, the storage within the client device is intended to play only a supplemental role, and it is basically presupposed that multimedia data is to be transferred from an owner (the other client device or a central multimedia server) of that multimedia data according to a request from a user.

Consequently, when many reproduction requests from many users are concentrated in the system, data transfer requests between client devices or between a client device and a central multimedia server occur frequently, and when there are many client devices which try to carry out the data transfer through the network in order to acquire the requested multimedia data upon receiving the reproduction requests from users, there arises a problem that it is impossible to carry out the data transfer immediately for many such client devices so that it is difficult to provide multimedia data with respect to many simultaneous accesses because of the limitation on a bandwidth of the network.

From user's viewpoint, for many users, this situation demands a considerable time since a reproduction request is entered first until a reproduction actually starts, and it may be necessary to carry out the input operation many times in some cases, so that there is a problem concerning the lowering of the service quality.

Of course, it is in principle possible to resolve this problem by providing all the multimedia data that can possibly be requested by the users in every client device, but this solution is quite impractical as it requires enormous costs and it makes resource utilization rates extremely low.

### SUMMARY OF THE INVENTION

It is therefore an object of the present invention to provide a distributed multimedia service system, a client device to be used in this system, and a scheme for providing multimedia data in this system, which are capable of reducing a required bandwidth of the network and providing multimedia data to many users simultaneously.

According to one aspect of the present invention there is provided a distributed multimedia service system using a network, comprising: a plurality of terminals for requesting and reproducing multimedia data; and a plurality of client devices, which are interconnected through the network and connected with said plurality of terminals, for providing requested multimedia data to said plurality of terminals according to requests, each client device having client cache means for caching multimedia data obtained through the network in response to a request in a unit of data to be continuously reproduced together.

According to another aspect of the present invention there is provided a client device in a distributed multimedia service system in which a plurality of client devices are interconnected through a network and connected with a plurality of terminals for requesting and reproducing multimedia data, said client device comprising: means for providing a requested multimedia data to a requesting terminal connected to said client device according to a request; and client cache means for caching multimedia data obtained through the network in response to a request in a unit of data to be continuously reproduced together.

According to another aspect of the present invention there is provided a method for providing multimedia data in a distributed multimedia service system in which a plurality of client devices are interconnected through a network and connected with a plurality of terminals for requesting and reproducing multimedia data, the method comprising the steps: providing a requested multimedia data from a client device to a requesting terminal connected to said client device according to a request; and caching multimedia data obtained at each client device through the network in response to a request, into a client cache of said each client device, in a unit of data to be continuously reproduced together.

Other features and advantages of the present invention will become apparent from the following description taken in conjunction with the accompanying drawings.

### BRIEF DESCRIPTION OF THE DRAWINGS

Fig. 1 is a block diagram of one embodiment of a distributed multimedia service system according to the present invention.

Fig. 2 is a diagram showing an allocation of a disk space managed by each client in the system of Fig. 1.

Fig. 3 is a block diagram of an internal configuration of each client in the system of Fig. 1.

Fig. 4 is a flow chart of the operation of the system of Fig. 1, since a request for the multimedia data from a user is entered into the system until the requested multimedia data is reproduced.

Figs. 5A and 5B are a flow chart of an exemplary procedure for determining a disk space region to read out the multimedia data in the system of Fig. 1.

Fig. 6 is a diagram showing an exemplary structure of a management information for a client cache in the system of Fig. 1.

Fig. 7 is a diagram showing an exemplary structure of a management information for a cluster cache in the system of Fig. 1.

Fig. 8 is a diagram for explaining an exemplary manner of determining a client to manage a cluster cache of each multimedia data in the system of Fig. 1.

Figs. 9A and 9B are a flow chart of an exemplary procedure for a client cache replacement processing in the system of Fig. 1.

Figs. 10A and 10B are a flow chart of an exemplary procedure for a cluster cache replacement processing in the system of Fig. 1.

### DETAILED DESCRIPTION OF THE PREFERRED EMBODIMENTS

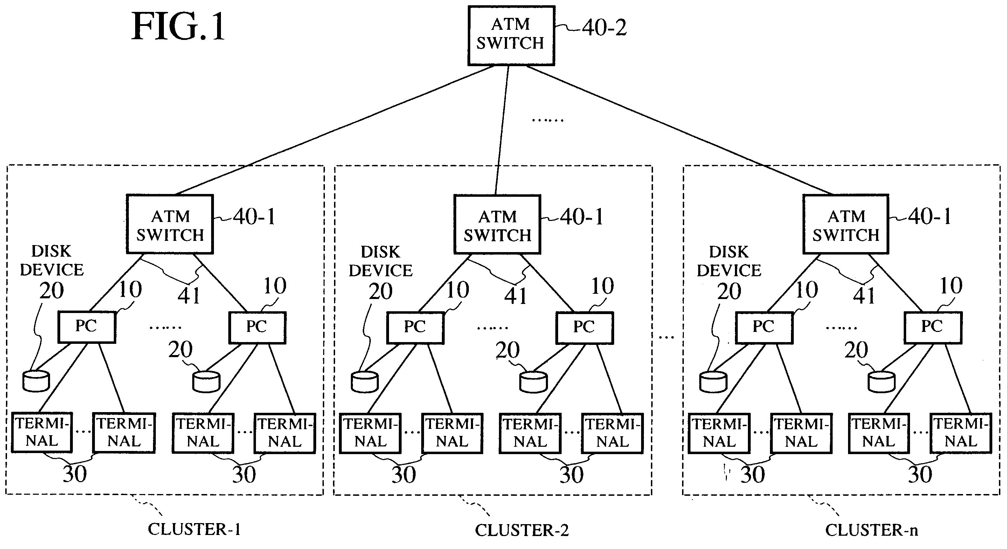

Referring now to Fig. 1 to Fig. 12, one embodiment of a distributed multimedia service system and its client device realizing a scheme for providing multimedia data according to the present invention will be described in detail.

In short, according to the scheme for providing multimedia data of the present invention, a caching technique is utilized at the client device in order to shorten an average wait time and reduce a number of occurrences of data transfer through a network such that a bandwidth of the network can be saved and many requests can be responded.

In general, the caching technique is used in a memory system of a computer, but the present invention utilizes this caching technique to cache the multimedia data transferred through the network at the client device, in view of the fact that the multimedia data contain an enormous amount of data as in a case of video data, which is expected to exceed a memory capacity available in the client device.

More specifically, the distributed multimedia service system in this embodiment has a basic configuration as shown in Fig. 1.

In this configuration of Fig. 1, a network is provided in a form of an ATM network in which a plurality of ATM switches 40-1 are interconnected through another ATM switch 40-2. Each ATM switch 40-1 is connected with an arbitrary number of client personal computers (clients) 10 such that clients 10 can communicate with each other through the network.

In addition, each client 10 is connected with an arbitrary number of terminals 30 and an arbitrary number of disk devices 20 such as hard disk devices. Note that each ATM switch 40-1 may also be connected with a dedicated server device which are connected with disk devices but not with any terminal, besides the clients 10.

The disk device 20 stores original or copied (cached) multimedia data and a cache management information to be described below. One multimedia data is given in a unit of data to be continuously reproduced together, such as a video file of a movie, etc.

In this embodiment, it is assumed that the original multimedia data are maintained in at least one location within the entire system. As for a scheme for storing and managing the original multimedia data, it is possible to use a scheme for maintaining these data by distributing these data over clients in the system (without using a central server), or a scheme for maintaining these data in a central server provided in the system. In the following, the former case of the system without a central server will be described. In this case, every client 10 has a function of a client as well as a function of a distributed server. It should be noted however that the present invention is equally applicable to a system in which at least one client 10 is replaced by a central server.

The terminal 30 is an input/output interface between a user and the system, which receives a reproduction request for a desired multimedia data from a user, and reproduces and presents the requested multimedia data to a user.

In this embodiment, a network structure is a cluster structure in which a cluster is formed by a plurality of clients 10 and clusters are hierarchically connected by an upper level network, rather than having all clients 10 connected at a single level.

For example, in Fig. 1, a plurality of clients 10 connected to the same ATM switch 40-1 form a group called cluster. A configuration of Fig. 1 has n such clusters (cluster-1 to cluster-n) where n is an integer. These cluster-1 to cluster-n are connected with each other by the respective ATM switches 40-1 through the upper level ATM switch 40-2.

In this embodiment, as will be described in detail below, each client 10 is provided with a cache dedicated to this client (client cache) while each cluster is provided with a cache dedicated to this cluster (cluster cache), so that when the requested multimedia data is not found in the client cache, the requested multimedia data is searched in the cluster cache in the cluster.

The cluster cache in the cluster can be in a form of being distributed over the clients in the cluster, or in a form of being provided at a particular device in the cluster. In the following, the former case of distributing the cluster cache over the clients in the cluster will be described.

Also, in this embodiment, it is assumed that each multimedia data is to be cached as a whole in a unit of data to be continuously reproduced together.

Now, an allocation of a disk space managed by each client 10 in this embodiment will be described.

In general, the caching technique is used in a memory system of a computer, but in this embodiment, this caching technique is utilized to cache the multimedia data transferred through the network in the disk device 20 provided at each client device 10, in view of the fact that the multimedia data contain an enormous amount of data as in a case of video data, which is expected to exceed a memory capacity available in each client device.

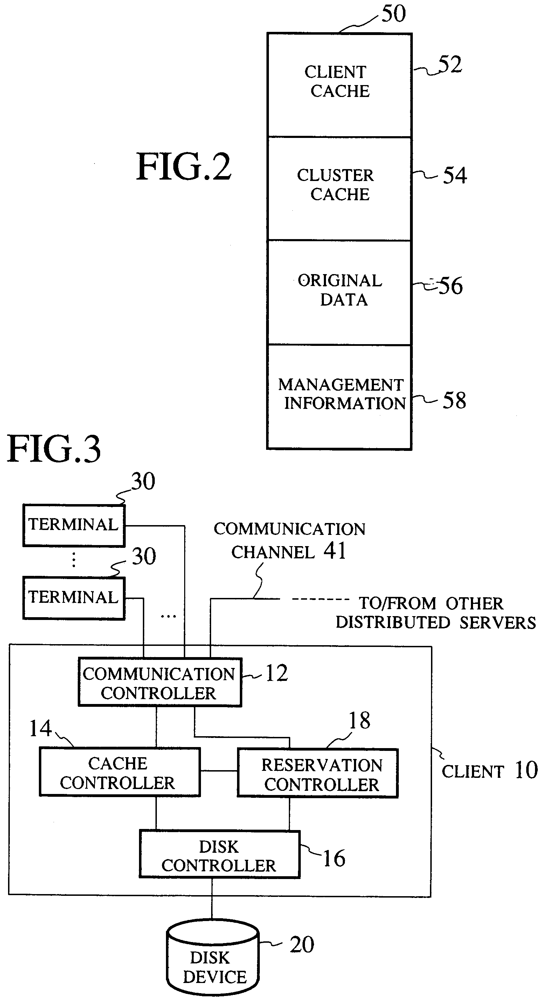

Fig. 2 shows an allocation of a disk space managed by each client 10. As shown in Fig. 2, a client cache 52, a cluster cache 54, an original data region 56, and a management information region 58 are allocated in a disk space 50.

The client cache 52 is a cache to be used exclusively by this client 10. The other clients 10 cannot make an access to this client cache 52.

The cluster cache 54 is a cache to be used exclusively by the cluster to which this client 10 belongs. This cluster cache 54 can be accessed by any of the clients 10 which belong to this cluster.

The original data region 56 is a region for storing the original multimedia data, which is not changed except for a case of addition, deletion, or correction of the multimedia data. This original data region 56 can be accessed by any of the clients 10 in the system.

The management information region 58 is a region to be used for managing the client cache 52 and the cluster cache 54.

Similarly as in the general caching technique, when all regions for storing the multimedia data are filled in the client cache 52 or the cluster cache 54, some region is released and the released region is utilized as a new cache region. In this embodiment, which region is to be released is determined according to a utilization frequency of each stored multimedia data. An information on the utilization frequency is provided in each client 10, and updated whenever there is an access to the multimedia data (regardless of whether an access is successful or not).

In addition, in this embodiment, a number of entries for utilization frequency information management provided in each client is greater than a number of cache entries. For instance, each client is provided with utilization frequency information entries for all multimedia data that can possibly be cached in that client. By managing the utilization frequency information for those multimedia data which are not present on the cache as well, it becomes possible to cache the multimedia data with a higher utilization frequency at a higher priority.

Note that a cache provided in the disk device 20 connected to each client 10 is also subjected to the output scheduling, so that a cache which is incorporated into the output scheduling in response to a request should be excluded from replacement targets until it finishes providing the requested multimedia data.

Next, time-slots used in the disk device 20 in this embodiment will be described.

In general, when a reading rate of the disk device 20 is faster than a reproduction rate of the multimedia data, it is possible to provide one disk to a plurality of users simultaneously. In such a case, the disk striping technique can be used effectively.

In this embodiment, assuming that a reading rate of the disk device 20 is faster than a reproduction rate of the multimedia data, the disk reading is utilized in time division by a plurality of users, and managed by using a concept of time-slots.

Each disk drive has a plurality of time-slots in equal length, and the read/write with respect to a disk is managed in a unit of this time-slot. More than one multimedia data cannot be read or written by one time-slot. Data read out by one time-slot is buffered on a memory (not shown) in the client 10, and reproduced from a buffer on the memory. Here, the time-slot is to be reserved in advance in order to guarantee that the reproduction of the multimedia data can be carried out continuously.

Now, assuming that the reproduction rate of the multimedia data is K Bps and the reading rate or the disk is D Bps (where K < D), a number of time-slots to be used is equal to D/K.

On the other hand, in order to write the multimedia data into a cache on the disk device 20 while reproducing the multimedia data at the same time, the multimedia data is written into the disk device 20 by using one time-slot from a buffer on the memory. In a case where the disk reading rate and the disk writing rate coincide, the lengths of the time-slots to be used in reading and writing are the same.

Next, a scheduling of the disk and the network in this embodiment will be described.

The multimedia data to be reproduced is read out from the disk of one of the clients 10 (or from the disk of a central server or one of the clients 10 in a case of using a central server), and if a transfer rate of the disk and the network is less than a transfer rate of the multimedia data, a degradation or loss of data could be caused so that a continuity of the multimedia data could be damaged.

In this embodiment, in order to prevent such a degradation or loss of data, the reproduction of the multimedia data is carried out only after resources such as disk, memory, and network which are involved in the reproduction of the multimedia data are scheduled according to a request. In a case where this scheduling cannot be made, it is assumed that either the request is to be refused, or the multimedia data is to be provided at a lowered quality. In the following, in order to simplify the explanation, a case of refusing the request when the scheduling cannot be made will be described.

With this provision, the disk for reproducing the multimedia data and a bandwidth of the network from that disk to the client are already reserved at a time of reproduction, so that the multimedia data can be reproduced continuously at a time of reproduction.

Next, an internal configuration of each client 10 in this embodiment will be described.

Fig. 3 shows an exemplary internal configuration of the client 10, which comprises a communication controller 12 connected with terminals 30 and a communication channel 41; a cache controller 14 connected with the communication controller 12; a disk controller 16 connected with the cache controller 14 and the disk device 20; and a reservation controller 18 connected with the communication controller 12, the cache controller 14, and the disk controller 16.

The communication controller 12 is connected to the network through the communication channel 41, and controls communications with the distributed servers, i.e., the other clients 10. The communication controller 12 is also connected with the terminals 30 for entering the reproduction requests for desired multimedia data from users, and reproducing the requested multimedia data. Note that in a case of using a dedicated server, no terminal 30 will be connected to such a dedicated server. The communication controller 12 also carries out the scheduling of the network, and provides an information regarding whether the scheduling is possible to the reservation controller 18.

The cache controller 14 is connected with the disk controller 16, the communication controller 12, and the reservation controller 18. This cache controller 14 judges whether the reproduction is possible according to a cache management information and an information from the reservation controller 18, and outputs a reproduction information to the communication channel 41 or the terminal 30 through the communication controller 12 when the reproduction is judged to be possible, in response to a request from the terminal 30 connected to this client 10 or the other client 10 through the communication channel 41. In addition, the cache controller 14 updates the cache management information stored in the disk device 20.

The disk controller 16 controls the disk device 20 which stores the multimedia data and the cache management information, so as to input/output the stored data or information according to a request from the cache controller 14. Also, the disk controller 16 carries out the scheduling of the disk device 20, and provides an information regarding whether the scheduling is possible to the reservation controller 18.

The reservation controller 18 judges a scheduling possibility concerning whether the network and the disk device 20 are sufficient for the reproduction of the multimedia data, and provides an information on this scheduling possibility to the cache controller 14.

Next, the operation in the distributed multimedia service system of this embodiment will be described.

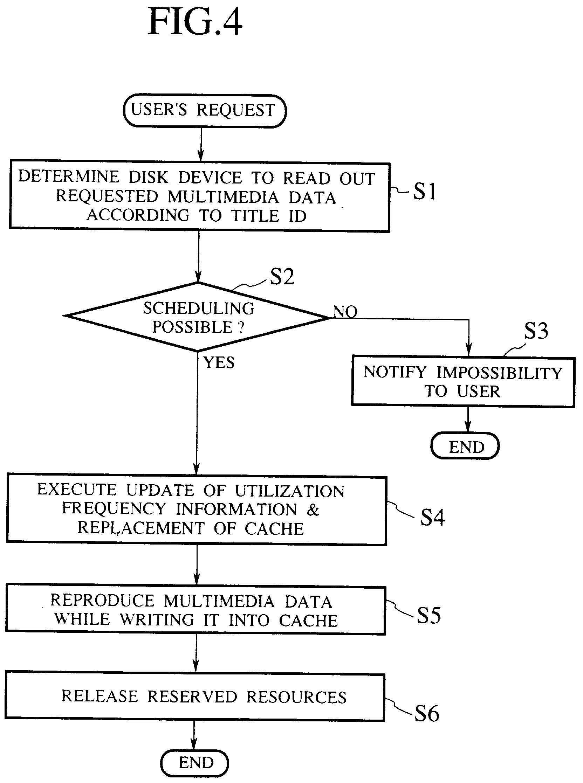

First, with reference to the flow chart of Fig. 4, the flow of processing since a request for the multimedia data from a user is entered into the system until the requested multimedia data is reproduced will be described.

When a request from a user is received through the terminal 30, the client 10 determines the disk device 20 to read out the requested multimedia data, according to a title ID given to each multimedia data (step S1). Here, there are cases in which the requested multimedia data is cached in the client cache 52 or the cluster cache 54, and cases in which the requested multimedia data is stored in the original data region 56. A method for determining the disk device 20 to read out the requested multimedia data will be described in further detail below.

Then, whether the scheduling is possible or not is judged (step S2). When the scheduling is not possible (step S2 NO), i.e., when the reservation of the disk device 20 or the network cannot be made even though the disk device 20 to read out the requested multimedia data is determined, the fact that the presentation of the multimedia data is impossible at this point is notified to the user, and the operation is terminated (step S3).

On the other hand, when the scheduling is possible (step S2 YES), the update of the utilization frequency information and the replacement of the cache are executed (step S4). In the cache replacement processing, a time-slot of the disk device 20 to be used for the cache replacement and a necessary network bandwidth are reserved.

Then, the multimedia data obtained by using the reserved time-slot of the disk device 20 and network bandwidth is then reproduced at the request source terminal 30. At this point, in a case of writing the multimedia data into the cache, the reproduction of the multimedia data is carried out while writing the multimedia data into the cache (step S5).

When the reproduction is finished, the reserved resources are released, and the reservation is cancelled (step S6).

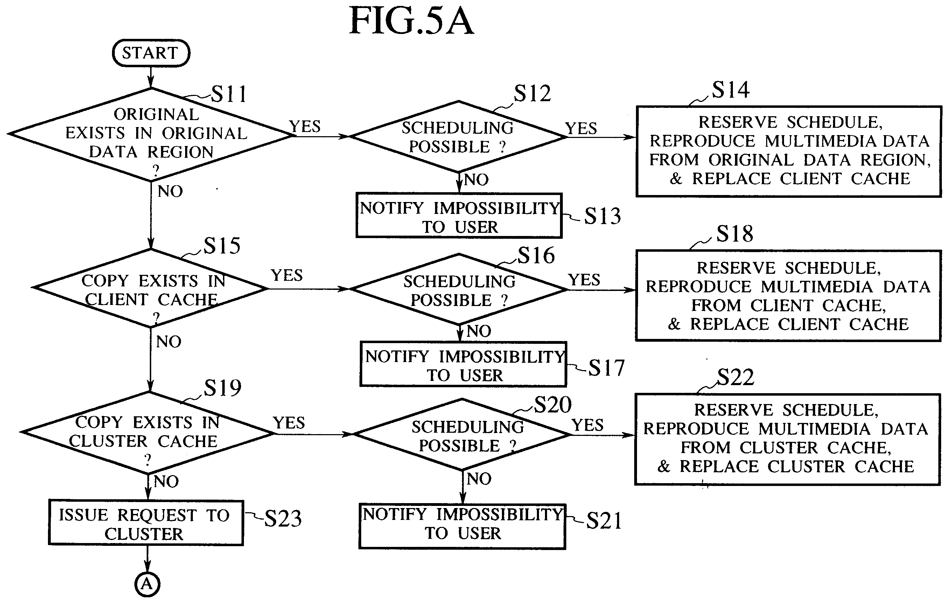

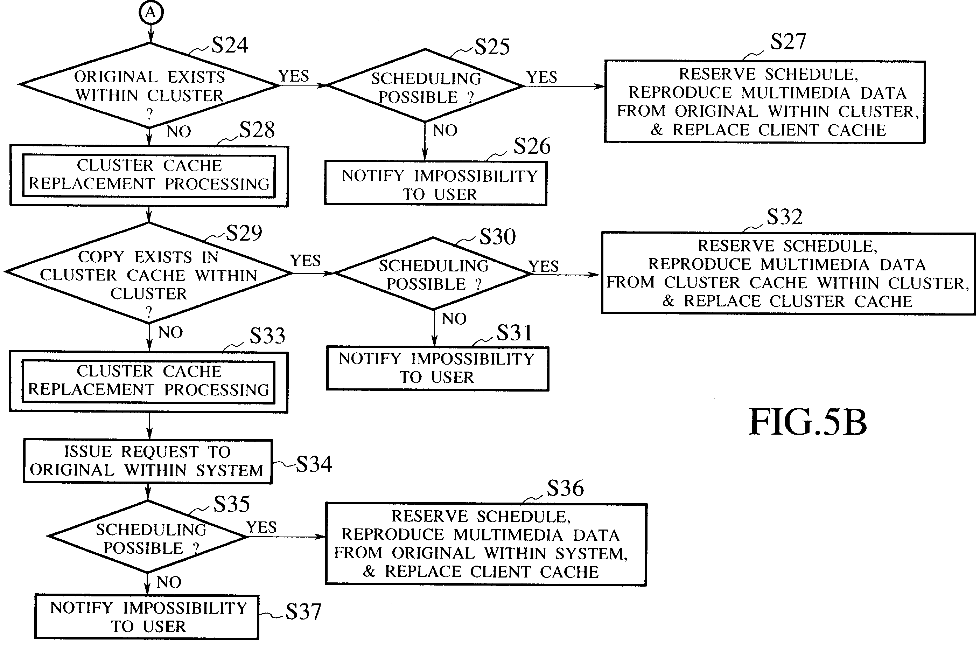

Next, with reference to the flow chart of Figs. 5A and 5B, an exemplary procedure for determining a disk space region to read out the multimedia data, that is, whether the multimedia data is to be read out from the client cache 52, the cluster cache 54, or the original data region 56, will be described.

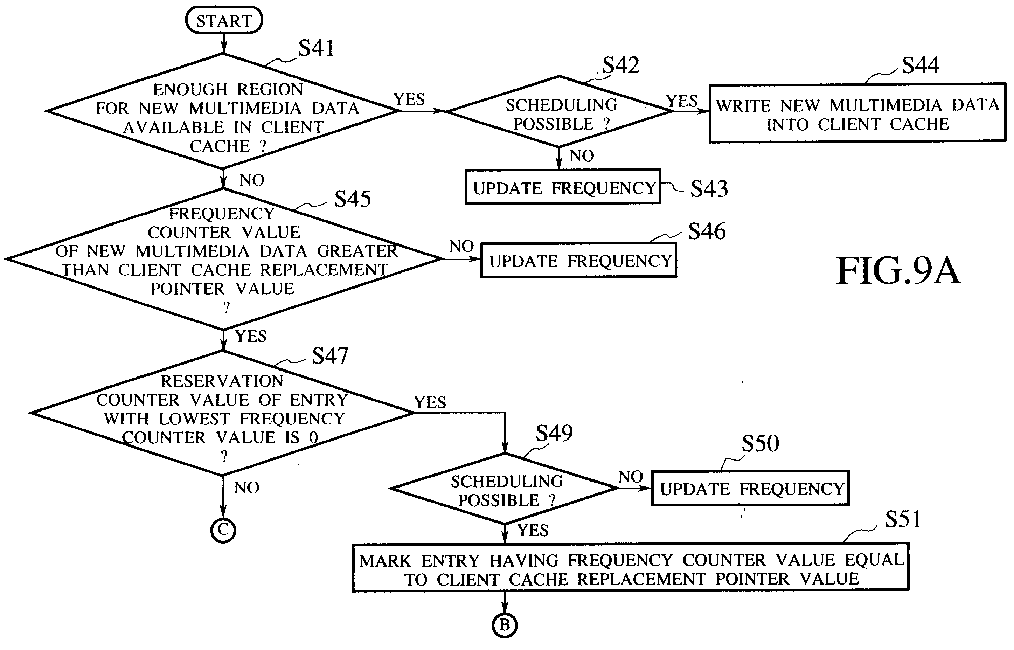

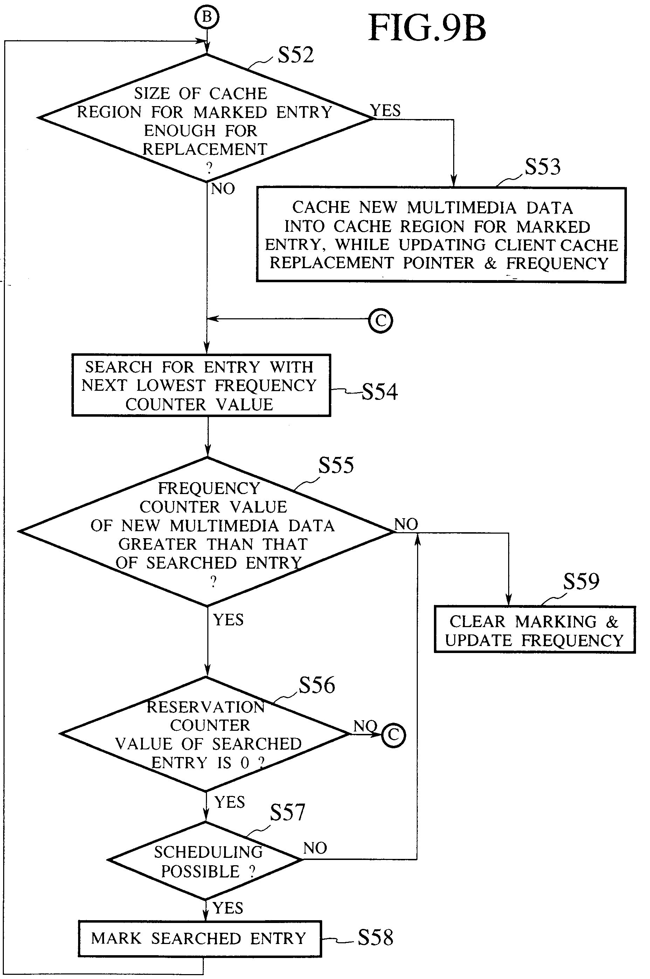

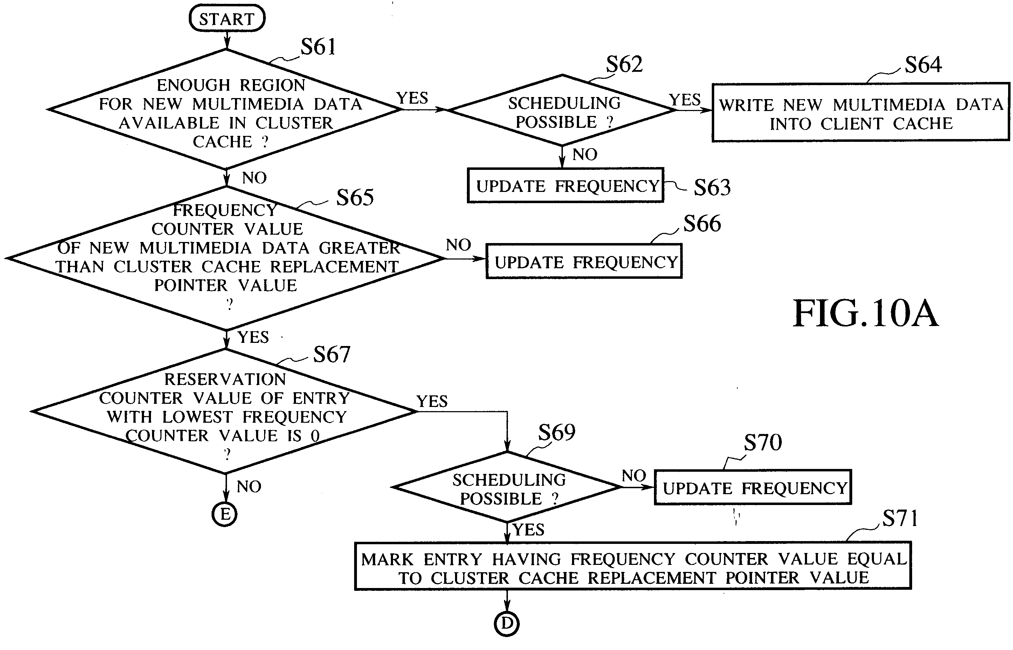

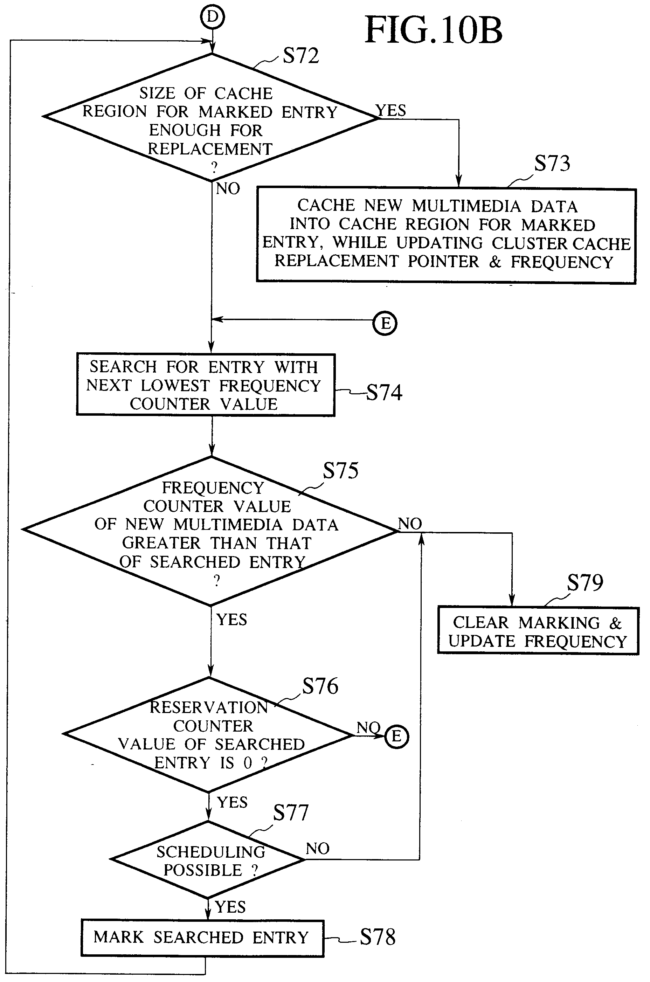

Note that the client cache replacement processing involved in this procedure of Figs. 5A and 5B will be described in further detail below with references to Figs. 9A and 9B, while the cluster cache replacement processing involved in this procedure of Figs. 5A and 5B will be described in further detail below with references to Figs. 10A and 10B.
(1) First, a case in which the original of the requested multimedia data exists in the client 10 which received the request is checked.
   Namely, when the request is received from the user, the client 10 checks whether the requested multimedia data exists in the original data region 56 of this client 10 itself or not (step S11).
   When the requested multimedia data exists in the original data region 56 (step S11 YES), whether the scheduling is possible of not is judged (step S12). When the scheduling is possible (step S12 YES), the scheduling reservation is made, and the requested multimedia data is reproduced from the original data region 56, while the replacement processing for the client cache 52 is executed (step S14).
   On the other hand, even when the requested multimedia data exists in the original data region 56, if the scheduling is not possible (step S12 NO), the fact that an access is impossible is notified to the user (step S13).
(2) Next, when the original of the requested multimedia data does not exist in the original data region 56 of this client 10, a case in which the copy of the requested multimedia data exists in the client cache 52 of this client 10 is checked.
   Namely, when the requested multimedia data does not exist in the original data region 56 (step S11 NO), the client 10 searches through the client cache 52 of this client 10 itself to see if the copy of the requested multimedia data exists in the client cache 52 or not (step S15).
   When the copy of the requested multimedia data exists in the client cache 52 (step S15 YES), whether the scheduling is possible of not is judged (step S16). When the scheduling is possible (step S16 YES), the scheduling reservation is made, and the requested multimedia data is reproduced from the client cache 52, while the replacement processing for the client cache 52 is executed (step S18).
   On the other hand, even when the requested multimedia data exists in the client cache 52, if the scheduling is not possible (step S16 NO), the fact that an access is impossible is notified to the user (step S17).
(3) Next, when the requested multimedia data also does not exist in the client cache 52 of this client 10, a case in which the copy of the requested multimedia data exists in the cluster cache 54 of this client 10 is checked.
   Namely, when the requested multimedia data does not exist in the client cache 52 of this client 10 (step S15 NO), the client 10 searches through the cluster cache 54 of this client 10 itself to see if the copy of the requested multimedia data exists in the cluster cache 54 or not (step S19).
   When the copy of the requested multimedia data exists in the cluster cache 54 (step S19 YES), whether the scheduling is possible of not is judged (step S20). When the scheduling is possible (step S20 YES), the scheduling reservation is made, and the requested multimedia data is reproduced from the cluster cache 54, while the replacement processing for the cluster cache 54 is executed (step S22).
   On the other hand, even when the requested multimedia data exists in the cluster cache 54, if the scheduling is not possible (step S20 NO), the fact that an access is impossible is notified to the user (step S21).
(4) Next, when the requested multimedia data also does not exist in the cluster cache 54 of this client 10, a case in which the original of the requested multimedia data exists within the cluster to which this client 10 belongs is checked.
   Namely, when the requested multimedia data does not exist in the cluster cache 54 of this client 10 (step S19 NO), the client 10 issues a request for the requested multimedia data to the cluster to which this client 10 belongs to see if the original of the requested multimedia data exists within the cluster to which this client 10 belongs (step S24).
   Each client 10 within this cluster which received this request then checks whether the original of the requested multimedia data exists in its own original data region 56, and returns a response indicating the result to the client 10 which issued this request (or only the client 10 which has the original of the requested multimedia data returns a response).
   When it is found that the original of the requested multimedia data exists at some client 10 within this cluster according to the responses to the request (step S24 YES), whether the scheduling is possible of not is judged (step S25). When the scheduling is possible (step S25 YES), the scheduling reservation is made, and the requested multimedia data is transferred through the network from the client 10 which has the original of the requested multimedia data so that the transferred multimedia data is reproduced, while the replacement processing for the client cache 52 is executed (step S27).
   On the other hand, even when the original of the requested multimedia data exists within this cluster, if the scheduling is not possible (step S25 NO), the fact that an access is impossible is notified to the user (step S26).
   Also, when the original of the requested multimedia data does not exist within the cluster (step S24 NO), the replacement processing for the cluster cache 54 is executed (step S28).
(5) Next, when the original of the requested multimedia data also does not exist within this cluster, a case in which the copy of the requested multimedia data exists in the cluster cache 54 of some client 10 within the cluster to which this client 10 belongs is checked.
   In this case, this client carries out communications with the other clients 10 within this cluster which have possibilities of having the copy of the requested multimedia data in its cluster cache 54, to see if the copy of the requested multimedia data exists in the cluster cache 54 of some client 10 within this cluster (step S29).
   When it is found that the copy of the requested multimedia data exists in the cluster cache 54 of some client 10 within this cluster (step S29 YES), whether the scheduling is possible of not is judged (step S30). When the scheduling is possible (step S30 YES), the scheduling reservation is made, and the requested multimedia data is transferred through the network from the client 10 which has the copy of the requested multimedia data so that the transferred multimedia data is reproduced, while the replacement processing for the cluster cache 54 is executed (step S32).
   On the other hand, even when the copy of the requested multimedia data exists within this cluster, if the scheduling is not possible (step S30 NO), the fact that an access is impossible is notified to the user (step S31).
   Also, when the copy of the requested multimedia data does not exist within the cluster (step S29 NO), the replacement processing for the cluster cache 54 is executed (step S33).
(6) Next, when the requested multimedia data also does not exist in the cluster cache 54 within this cluster, i.e., the requested multimedia data cannot be found within this cluster, the original of the requested multimedia data which exists somewhere in this system (outside of this cluster) is to be reproduced.
   In this case, the client 10 issues a request for the original of the requested multimedia data within the system (step S34).
   Then, whether the scheduling is possible of not is judged (step S35). When the scheduling is possible (step S35 YES), the scheduling reservation is made, and the requested multimedia data is transferred through the network from the client 10 within the system which has the original of the requested multimedia data so that the transferred multimedia data is reproduced, while the replacement processing for the client cache 52 is executed (step S36).
   On the other hand, if the scheduling is not possible (step S35 NO), the fact that an access is impossible is notified to the user (step S37).

in the above procedure, the judgment in each case (1) to (6) is made at a stage of scheduling, prior to the reproduction of the multimedia data. In this manner, it is possible to guarantee the continuity of the multimedia data by reserving the disk and the bandwidth of the network.

As described, according to this embodiment, by caching the multimedia data at the client device in a unit of data to be continuously reproduced together, it is possible to reduce a number of occurrences of data transfer through a network such that a bandwidth of the network can be saved and the multimedia data can be provided to many users simultaneously.

In addition, from user's viewpoint, it is possible to reduce a possibility of being kept awaiting for more than a certain amount of time since a reproduction request is entered first until a reproduction actually starts, so that an improvement of the service quality can be expected.

Now, the client cache 52 and the cluster cache 54 used in this embodiment will be described in further detail.

First, the cache management information will be described. In this embodiment, the cache management information includes the management information for the client cache 52 and the management information for the cluster cache 54.

The management information for the client cache 52 is to be used independently by each client 10.

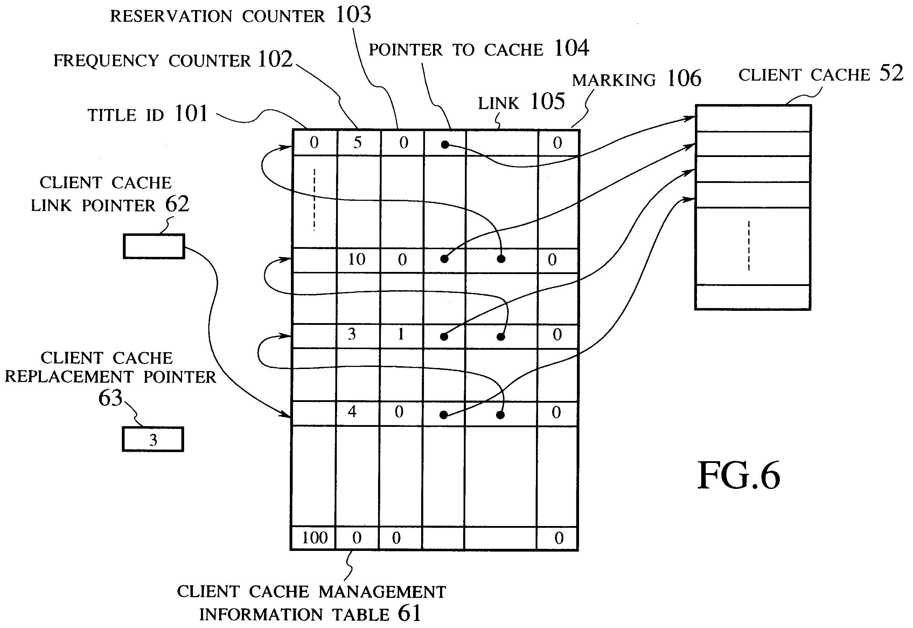

Fig. 6 shows an exemplary structure of the management information for the client cache 52. This management information for the client cache 52 shown in Fig. 6 has a client cache management information table 61, a client cache link pointer 62, and a client cache replacement pointer 63.

In this embodiment, a number of entries in the client cache management information table 61 coincides with a number of multimedia data in this system, i.e., a number of title IDs in this system.

Each entry of the client cache 52 contains the following fields.

A "title ID" field 101 stores a title ID which is an identifier for identifying each multimedia data.

A "frequency counter" field 102 records a number of times for which the corresponding multimedia data has been searched through this table in response to the reproduction request (i.e., a number of reproduction requests). A value of this frequency counter is incremented whenever there is a reproduction request for the corresponding multimedia data, even if the multimedia data is actually not reproduced. When one of the frequency counters within this client cache management information table 61 for the client cache 52 reaches to a predetermined maximum value, all the frequency counters in this client cache management information table 61 for the client cache 52 are decremented. Among the entries for the cached multimedia data, the entry having the lowest frequency counter value will be the replacement target in the client cache replacement processing.

A "reservation counter" field 103 records whether this cache entry is scheduled or not. A value of the reservation counter is incremented when the corresponding cache entry is scheduled, and decremented when the reproduction is finished. The reservation counter has an initial value 0, and when the reservation counter has a value 0, it indicates that no one is using the corresponding entry. When the reservation counter has a value other than 0, the corresponding entry will not be set as the replacement target in the client cache replacement processing.

A "pointer to cache" field 104 stores a pointer value pointing to the client cache 52 corresponding to this entry. This "pointer to cache" field 104 is null when the entry is not cached.

A "link" field 105 is validated when the corresponding multimedia data is cached. This "link" field 105 stores a pointer value for setting a link to the next entry in which the corresponding multimedia data is cached.

A "marking" field 106 is validated when the corresponding multimedia data is set as the client cache replacement target. This "marking" field 106 is utilized in the client cache replacement processing.

In this manner, the management information of the client cache 52 is managed in a link structure.

The client cache link pointer 62 is pointing to a top of the above described link.

The client cache replacement pointer 63 is indicating the lowest value among the frequency counters corresponding to the multimedia data cached within the client cache 52, which is utilized at a time of the client cache replacement processing.

On the other hand, the management information for the cluster cache 54 is to be used within the cluster.

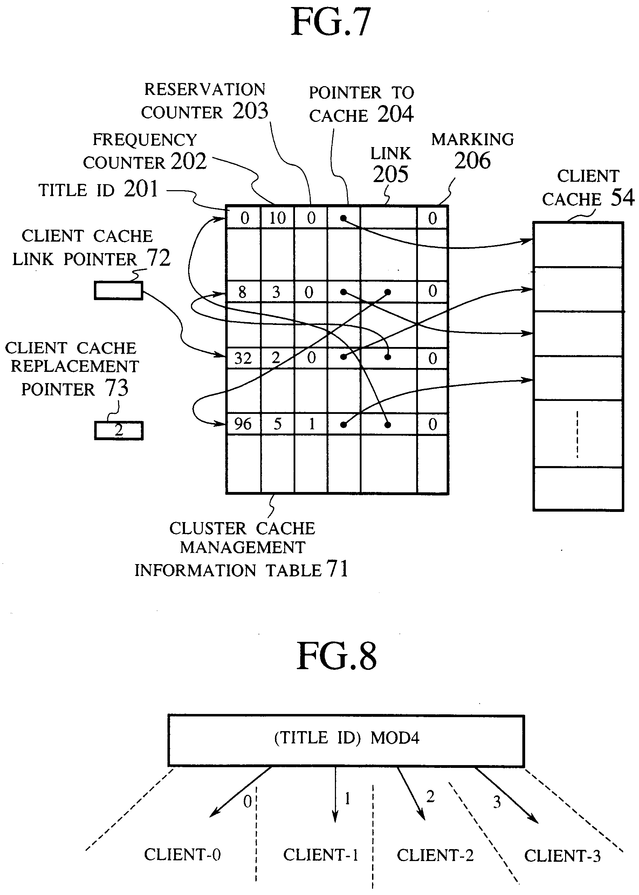

Fig. 7 shows an exemplary structure of the management information for the cluster cache 54. This management information for the cluster cache 54 shown in Fig. 7 has a cluster cache management information table 71, a cluster cache link pointer 72, and a cluster cache replacement pointer 73.

The cluster cache 54 is managed by the cluster as a whole. In this embodiment, in order to avoid a complication in the management, which client 10 within the cluster manages which multimedia data cache is determined according to a value obtained by applying a hash function to the title ID of each multimedia data. For instance, a residue resulting from a division of the title ID by a number of clients 10 within the cluster can be used as a value of a hash function. More specifically, as shown in Fig. 8, when there are four clients constituting a single cluster, the client having a node ID which is equal to a residue resulting from a division of the title ID by 4 is going to manage the multimedia data cache having that title ID.

In this embodiment, a number of entries in the cluster cache management information table 71 is set equal to a total number of multimedia data for which the hash function values correspond to one client 10.

Each entry of the cluster cache 54 contains the following fields, similarly as the client cache 52 described above.

A "title ID" field 201 stores a title ID which is an identifier for identifying each multimedia data.

A "frequency counter" field 202 records a number of times for which the corresponding multimedia data has been searched through this table in response to the reproduction request (i.e., a number of reproduction requests). A value of this frequency counter is incremented whenever there is a reproduction request for the corresponding multimedia data, even if the multimedia data is actually not reproduced. When one of the frequency counters within this cluster cache management information table 71 for the cluster cache 54 reaches to a predetermined maximum value, all the frequency counters in this cluster cache management information table 71 for the cluster cache 54 are decremented. Among the entries for the cached multimedia data, the entry having the lowest frequency counter value will be the replacement target in the cluster cache replacement processing.

A "reservation counter" field 203 records whether this cache entry is scheduled or not. A value of the reservation counter is incremented when the corresponding cache entry is scheduled, and decremented when the reproduction is finished. The reservation counter has an initial value 0, and when the reservation counter has a value 0, it indicates that no one is using the corresponding entry. When the reservation counter has a value other than 0, the corresponding entry will not be set as the replacement target in the cluster cache replacement processing.

A "pointer to cache" field 204 stores a pointer value pointing to the cluster cache 54 corresponding to this entry. This "pointer to cache" field 204 is null when the entry is not cached.

A "link" field 205 is validated when the corresponding multimedia data is cached. This "link" field 205 stores a pointer value for setting a link to the next entry in which the corresponding multimedia data is cached.

A "marking" field 206 is validated when the corresponding multimedia data is set as the cluster cache replacement target. This "marking" field 206 is utilized in the cluster cache replacement processing.

The cluster cache link pointer 72 is pointing to a top of the link in the link structure of the cluster cache 54, such that the cluster cache 54 can be searched by tracing the link structure starting from the top of the cluster cache 54 indicated by this cluster cache link pointer 72.

The cluster cache replacement pointer 73 is indicating the lowest value among the frequency counters corresponding to the multimedia data cached within the cluster cache 54, which is utilized at a time of the cluster cache replacement processing.

Next, the client cache replacement processing to be carried out in the procedure shown in Figs. 5A and 5B will be described in detail. An exemplary procedure for this client cache replacement processing is shown in Figs. 9A and 9B.

In each client 10, the multimedia data with the lowest frequency (the smallest number of reproduction requests) among all the multimedia data existing in that client cache 52 is indicated by the client cache replacement pointer 63 provided in that client 10.

First, whether an enough region for storing a new multimedia data to be cached is available in the client cache 52 or not is judged (step S41). When there is an enough region (step S41 YES), whether the scheduling is possible or not is judged (step S42). When the scheduling is possible (step S42 YES), the new multimedia data is written into the available region in the client cache 52 (step S44). On the other hand, when the scheduling is not possible (step S42 NO), the frequency counter value of the new multimedia data is updated without updating the client cache 52 (step S43).

When an enough region is not available (step S41 NO), the following conditions are checked by using the client cache replacement pointer 63.

Namely, whether the frequency counter value of the new multimedia data is greater than the value of the client cache replacement pointer 63 or not is judged (step S45). If not, the frequency counter value of the new multimedia data is updated without updating the client cache 52 (step S46).

Otherwise, next, whether the reservation counter value of the entry with the lowest frequency counter value is 0 or not is judged (step S47). If not, the procedure proceeds to the step S54 described below.

Otherwise, next, whether the scheduling is possible or not is judged (step S49). If not, the frequency counter value of the new multimedia data is updated without updating the client cache 52 (step S50).

Here, the scheduling possibility is judged, for example, by checking whether there is at least one idle time-slot in the corresponding disk and the writing into the disk can be carried out by using this idle time-slot.

When all the above three conditions are satisfied (steps S45, S47 and S49 YES), the "marking" field of the entry having the frequency counter value which is equal to the value of the client cache replacement pointer 63 is marked (step S51).

Then, whether a size of a cache region for the marked entry is enough for the replacement or not is judged (step S52).

When a size of a cache region for the marked entry is enough (step S52 YES), the new multimedia data is cached into this cache region for the marked entry, while the values of the client cache replacement pointer 63 and the frequency counter of the new multimedia data are updated (step S53).

When a size of a cache region for the marked entry is not enough (step S52 NO), or when the reservation counter value of the entry with the lowest frequency counter value is not 0 (step S47 NO), the entry with the next lowest frequency counter value is searched (step S54).

Then, whether the frequency counter value of the new multimedia data is greater than that of the searched entry or not is judged (step S55). If not, the marking is cleared and the frequency counter value of the new multimedia data is updated without updating the client cache 52 (step S59).

Otherwise, next, whether the reservation counter value of the searched entry is 0 or not is judged (step S56). If not, the procedure returns to the step S54 described above.

Otherwise, next, whether the scheduling is possible or not is judged (step S57). If not, the marking is cleared and the frequency counter value of the new multimedia data is updated without updating the client cache 52 (step S59).

When all the above three conditions are satisfied (steps S55, S56 and S57 YES), the "marking" field of the searched entry is marked (step S58), and the procedure returns to the step S52 described above.

In this manner, in a case of carrying out the replacement, the entry with the lowest frequency counter value and the reservation counter value equal to 0 is set as the replacement target. When the entry with the lowest frequency counter value has the reservation counter value not equal to 0, the entry with the next lowest frequency counter value and the reservation counter value equal to 0 is set as the replacement target, and so on.

The "marking" field of the entry which is set as the replacement target is marked, but the actual replacement of the client cache 52 does not take place until the enough cache region to store the new multimedia data is secured. When the enough cache region to store the new multimedia data cannot be secured, the marking is cleared and the update of the client cache 52 is not carried out.

Next, the cluster cache replacement processing to be carried out in the procedure shown in Figs. 5A and 5B will be described in detail. An exemplary procedure for this cluster cache replacement processing is shown in Figs. 10A and 10B. Note that this cluster cache replacement processing is basically similar to the client cache replacement processing described above.

In each client 10, the multimedia data with the lowest frequency (the smallest number of reproduction requests) among all the multimedia data existing in that cluster cache 54 is indicated by the cluster cache replacement pointer 73 provided in that client 10.

First, whether an enough region for storing a new multimedia data to be cached is available in the cluster cache 54 or not is judged (step S61). When there is an enough region (step S61 YES), whether the scheduling is possible or not is judged (step S62). When the scheduling is possible (step S62 YES), the new multimedia data is written into the available region in the cluster cache 54 (step S64). On the other hand, when the scheduling is not possible (step S62 NO), the frequency counter value of the new multimedia data is updated without updating the cluster cache 54 (step S63).

When an enough region is not available (step S61 NO), the following conditions are checked by using the cluster cache replacement pointer 73.

Namely, whether the frequency counter value of the new multimedia data is greater than the value of the cluster cache replacement pointer 73 or not is judged (step S65). If not, the frequency counter value of the new multimedia data is updated without updating the cluster cache 54 (step S66).

Otherwise, next, whether the reservation counter value of the entry with the lowest frequency counter value is 0 or not is judged (step S67). If not, the procedure proceeds to the step S74 described below.

Otherwise, next, whether the scheduling is possible or not is judged (step S69). If not, the frequency counter value of the new multimedia data is updated without updating the cluster cache 54 (step S70).

Here, the scheduling possibility is judged, for example, by checking whether there is at least one idle time-slot in the corresponding disk and the writing into the disk can be carried out by using this idle time-slot and whether a communication bandwidth in the network greater than the reproduction rate of the new multimedia data can be reserved between the client 10 which reproduces the new multimedia data and the cluster cache 54.

When all the above three conditions are satisfied (steps S65, S67 and S69 YES), the "marking" field of the entry having the frequency counter value which is equal to the value of the cluster cache replacement pointer 73 is marked (step S71).

Then, whether a size of a cache region for the marked entry is enough for the replacement or not is judged (step S72).

When a size of a cache region for the marked entry is enough (step S72 YES), the new multimedia data is cached into this cache region for the marked entry, while the values of the cluster cache replacement pointer 73 and the frequency counter of the new multimedia data are updated (step S73).

When a size of a cache region for the marked entry is not enough (step S72 NO), or when the reservation counter value of the entry with the lowest frequency counter value is not 0 (step S67 NO), the entry with the next lowest frequency counter value is searched (step S74).

Then, whether the frequency counter value of the new multimedia data is greater than that of the searched entry or not is judged (step S75). If not, the marking is cleared and the frequency counter value of the new multimedia data is updated without updating the cluster cache 54 (step S79).

Otherwise, next, whether the reservation counter value of the searched entry is 0 or not is judged (step S76). If not, the procedure returns to the step S74 described above.

Otherwise, next, whether the scheduling is possible or not is judged (step S77). If not, the marking is cleared and the frequency counter value of the new multimedia data is updated without updating the cluster cache 54 (step S79).

When all the above three conditions are satisfied (steps S75, S76 and S77 YES), the "marking" field of the searched entry is marked (step S78), and the procedure returns to the step S72 described above.

In this manner, in a case of carrying out the replacement, the entry with the lowest frequency counter value and the reservation counter value equal to 0 is set as the replacement target. When the entry with the lowest frequency counter value has the reservation counter value not equal to 0, the entry with the next lowest frequency counter value and the reservation counter value equal to 0 is set as the replacement target, and so on.

The "marking" field of the entry which is set as the replacement target is marked, but the actual replacement of the cluster cache 54 does not take place until the enough cache region to store the new multimedia data is secured. When the enough cache region to store the new multimedia data cannot be secured, the marking is cleared and the update of the cluster cache 54 is not carried out.

Using this procedure, the client 10 reproducing the multimedia data also transfers this multimedia data to be cached to the cluster cache 54 at the same time as the reproduction of this multimedia data, and the client 10 having the corresponding client cache 54 carries out the writing of this multimedia data into the client cache 54 by using an idle time-slot.

Next, the scheduling reservation in this embodiment will be described in further detail.

As described above, prior to the reproduction of the multimedia data, whether it is possible to allocate the resources such as the network, the disk, etc. is checked,, and if possible, these resources are reserved and allocated. For the bandwidth of the network, it is necessary to have the bandwidth sufficient for reproducing the multimedia data in real time.

In the management information for the client cache 52 or the management information for the cluster cache 54, in a case of reading the multimedia data from the cache, the multimedia data in a process of reproduction is excluded from the replacement target by incrementing the value of the corresponding reservation counter. When the reproduction of the multimedia data is finished, the reserved scheduling is released. The value of the reservation counter of the cache entry used is then decremented.

In this manner, according to this embodiment, by caching the multimedia data at the client device in a unit of data to be continuously reproduced together, it is possible to reduce a number of occurrences of data transfer through a network such that a bandwidth of the network can be saved and the multimedia data can be provided to many users simultaneously.

Moreover, the client device manages the frequency information for all the multimedia data that can possibly be cached, even for those which are currently not cached, so that it is possible to cache those multimedia data with the higher utilization frequencies more effectively.

Furthermore, the cache replacement is carried out while the multimedia data which is in a process of being supplied from the cache is excluded from the replacement target, so that it is possible to prevent an erroneous deletion of the multimedia data in a process of reproduction from the cache, and it is possible to reproduce the multimedia data without damaging its continuity.

In addition, from user's viewpoint, it is possible to reduce a possibility of being kept awaiting for more than a certain amount of time since a reproduction request is entered first until a reproduction actually starts, so that an improvement of the service quality can be expected.

It is to be noted that the configuration of Fig. 1 uses an exemplary cluster structure with a single hierarchical order, but it is equally possible to use various other types of cluster structure in the present invention.

For example, it is possible to form clusters hierarchically by collecting the lower level clusters together. In a case of Fig. 1, the higher level cluster can be formed by all the clients 10 belonging to the cluster-1 to the cluster-n. It is also possible to form one higher level cluster from the cluster-1 to the cluster-m, and another higher level cluster from the cluster-(m+1) to the cluster-n, where 1 < m < n. It is also possible to form one higher level cluster from the cluster-1 to the cluster-m, while not forming any higher level cluster from the cluster-(m+1) to the cluster-n.

Fig. 1 shows an exemplary configuration in which it is possible to realize the hierarchical cluster structure with up to two hierarchical orders, but it is also possible to form the hierarchical cluster structure with more hierarchical orders by connecting the other clusters to the ATM switch 40-2 through any desired number of other ATM switches.

Note that Fig. 1 shows an exemplary configuration in which each client 10 belongs to some lowest level cluster, but it is also possible to adopt a configuration in which the cluster structure is not used for some of the ATM switches 40-1 if desired.

Also, Fig. 1 shows an exemplary system in which a plurality of clients 10 are connected to each ATM switch 40-1, but it is also possible to include an ATM switch 40-1 to which only one client 10 is connected. In such a case, this client 10 does not belong to any lowest level cluster, but it is still possible for this client 10 to belong to some higher level cluster.

Thus any desired type of the cluster structure can be used in the present invention.

When the clusters are hierarchically set up, the cluster cache in the higher level cluster is basically similar to the cluster cache of the lowest level cluster described above.

Also, in a configuration of Fig. 1, as described above where the cluster cache 54 is provided in each cluster so that, when the requested data is not found in the client cache 52, the requested multimedia data is searched in the cluster cache 54. In a similar manner, in a case of providing the higher level cluster structure, when the requested multimedia data is not found in the cluster cache of the lower level cluster, the requested multimedia data is to be searched in the cluster cache of the sequentially higher level cluster.

In the above embodiment, only one original of each multimedia data is provided within the system, but it is also possible expand the above embodiment by providing a plurality of originals of each multimedia data within the system so as to improve the simultaneous service performance.

Also, the above embodiment is directed to an exemplary case of not using the central server, but it is possible to use a configuration in which a part or a whole of the originals of the multimedia data are provided in the central server and no original of the multimedia data is provided in some or all of the clients 10.

Also, the above embodiment is directed to an exemplary case of using the ATM network with ATM switches as the network communication scheme, but the present invention is equally applicable to any other type of network communication scheme.

It is also to be noted that, besides those already mentioned above, many modifications and variations of the above embodiment may be made without departing from the novel and advantageous features of the present invention. Accordingly, all such modifications and variations are intended to be included within the scope of the appended claims.

## Claims

1. A distributed multimedia service system using a network, comprising:
a plurality of terminals for requesting and reproducing multimedia data; and
a plurality of client devices, which are interconnected through the network and connected with said plurality of terminals, for providing requested multimedia data to said plurality of terminals according to requests, each client device having client cache means for caching multimedia data obtained through the network in response to a request in a unit of data to be continuously reproduced together.

2. The system of claim 1, wherein each client device also has means for reserving resources necessary in providing a requested multimedia data to a requesting terminal, prior to a transfer of the requested multimedia data to the requesting terminal.

3. The system of claim 1, wherein each client device also has means for reserving resources necessary in obtaining a requested multimedia data through the network, prior to a. transfer of the requested multimedia data through the network.

4. The system of claim 1, wherein each client device also has:
memory means for storing a frequency information for each multimedia data that can possibly be cached into the client cache means, the frequency information indicating a number of times for which each multimedia data were accessed; and
means for executing a cache replacement processing for the client cache means according to the frequency information of each multimedia data stored in the memory means.

5. The system of claim 4, wherein the frequency information stored in the memory means is updated when a requested multimedia data cached in the client cache means is provided in response to a request and when a requested multimedia data obtained through the network is provided in response to a request.

6. The system of claim 1, wherein each client device also has:
memory means for registering an information as to whether each cached multimedia data in the client cache means is currently supplied to at least one terminal or not; and
means for executing a cache replacement processing for the client cache means while a cached multimedia data which is currently supplied to at least one terminal is excluded from replacement targets according to the information registered in the memory means.

7. The system of claim 1, wherein a number of the client devices are grouped together to form a cluster, and
each client device belonging to the cluster also has cluster cache means for caching multimedia data which is obtained through the network in response to a request and allocated to said each client device within the cluster, in a unit of data to be continuously reproduced together.

8. The system of claim 7, wherein said each client device belonging to the cluster searches a requested multimedia data in the cluster cache means when the requested multimedia data does not exist in the client cache means.

9. The system of claim 7, wherein said each client device belonging to the cluster searches a requested multimedia data in the cluster cache means of other client devices belonging to the cluster when the requested multimedia data does not exist in both the client cache means and the cluster cache means of said each client device.

10. The system of claim 7, wherein said each client device belonging to the cluster searches a requested multimedia data in the cluster cache means of other client devices belonging to the cluster before requesting an original of the requested multimedia data in the system through the network.

11. The system of claim 1, wherein originals of the multimedia data are distributedly stored in said plurality of client devices.

12. The system of claim 11, wherein each client device searches a requested multimedia data in the client cache means when an original of the requested multimedia data does not exist in said each client device.

13. A client device in a distributed multimedia service system in which a plurality of client devices are interconnected through a network and connected with a plurality of terminals for requesting and reproducing multimedia data, said client device comprising:
means for providing a requested multimedia data to a requesting terminal connected to said client device according to a request; and
client cache means for caching multimedia data obtained through the network in response to a request in a unit of data to be continuously reproduced together.

14. The client device of claim 13, further comprising means for reserving resources necessary in providing a requested multimedia data to a requesting terminal, prior to a transfer of the requested multimedia data to the requesting terminal.

15. The client device of claim 13, further comprising means for reserving resources necessary in obtaining a requested multimedia data through the network, prior to a transfer of the requested multimedia data through the network.

16. The client device of claim 13, further comprising:
memory means for storing a frequency information for each multimedia data that can possibly be cached into the client cache means, the frequency information indicating a number of times for which each multimedia data were accessed; and
means for executing a cache replacement processing for the client cache means according to the frequency information of each multimedia data stored in the memory means.

17. The client device of claim 16, wherein the frequency information stored in the memory means is updated when a requested multimedia data cached in the client cache means is provided in response to a request and when a requested multimedia data obtained through the network is provided in response to a request.

18. The client device of claim 13, further comprising:
memory means for registering an information as to whether each cached multimedia data in the client cache means is currently supplied to at least one terminal or not; and
means for executing a cache replacement processing for the client cache means while a cached multimedia data which is currently supplied to at least one terminal is excluded from replacement targets according to the information registered in the memory means.

19. The client device of claim 13, wherein said client device is grouped together with a number of other client devices in the system to form a cluster, and
said client device further comprises cluster cache means for caching multimedia data which is obtained through the network in response to a request and allocated to said client device within the cluster, in a unit of data to be continuously reproduced together.

20. The client device of claim 19, wherein said client device searches a requested multimedia data in the cluster cache means when the requested multimedia data does not exist in the client cache means.

21. The client device of claim 19, wherein said client device searches a requested multimedia data in the cluster cache means of other client devices belonging to the cluster when the requested multimedia data does not exist in both the client cache means and the cluster cache means of said client device.

22. The client device of claim 19, wherein said client device searches a requested multimedia data in the cluster cache means of other client devices belonging to the cluster before requesting an original of the requested multimedia data in the system through the network.

23. The client device of claim 13, wherein originals of the multimedia data are distributedly stored in said plurality of client devices in the system.

24. The client device of claim 23, wherein said client device searches a requested multimedia data in the client cache means when an original of the requested multimedia data does not exist in said client device.

25. A method for providing multimedia data in a distributed multimedia service system in which a plurality of client devices are interconnected through a network and connected with a plurality of terminals for requesting and reproducing multimedia data, the method comprising the steps:
providing a requested multimedia data from a client device to a requesting terminal connected to said client device according to a request; and
caching multimedia data obtained at each client device through the network in response to a request, into a client cache of said each client device, in a unit of data to be continuously reproduced together.

26. The method of claim 25, further comprising the step of reserving resources necessary in providing a requested multimedia data from a client device to a requesting terminal, prior to a transfer of the requested multimedia data to the requesting terminal.

27. The method of claim 25, further comprising the step of reserving resources necessary in obtaining a requested multimedia data at a client device through the network, prior to a transfer of the requested multimedia data through the network.

28. The method of claim 25, further comprising the steps of:
storing at each client device a frequency information for each multimedia data that can possibly be cached into the client cache of said each client device, the frequency information indicating a number of times for which each multimedia data were accessed; and
executing a cache replacement processing for the client cache of said each client device according to the frequency information of each multimedia data stored at the storing step.

29. The method of claim 28, wherein the frequency information stored at the storing step is updated when a requested multimedia data cached in the client cache means is provided in response to a request and when a requested multimedia data obtained through the network is provided in response to a request.

30. The method of claim 25, further comprising the steps of:
registering at each client device an information as to whether each cached multimedia data in the client cache of said each client device is currently supplied to at least one terminal or not; and
executing a cache replacement processing for the client cache of said each client device while a cached multimedia data which is currently supplied to at least one terminal is excluded from replacement targets according to the information registered at the registering step.

31. The method of claim 25, wherein a number of the client devices are grouped together to form a cluster in the system, and
the method further comprises the step of caching multimedia data which is obtained at each client device belonging to the cluster through the network in response to a request and allocated to said each client device within the cluster, into a cluster cache of said each client device, in a unit of data to be continuously reproduced together.

32. The method of claim 31, further comprising the step of searching a requested multimedia data in the cluster cache of said each client device belonging to the cluster when the requested multimedia data does not exist in the client cache of said each client device.

33. The method of claim 31, further comprising the step of searching a requested multimedia data in the cluster cache of other client devices belonging to the cluster when the requested multimedia data does not exist in both the client cache and the cluster cache of said each client device belonging to the cluster.

34. The method of claim 31, further comprising the step of searching a requested multimedia data in the cluster cache of other client devices belonging to the cluster before requesting an original of the requested multimedia data in the system through the network at said each client device belonging to the cluster.

35. The method of claim 25, wherein originals of the multimedia data are distributedly stored in said plurality of client devices in the system.

36. The method of claim 35, further comprises the step of searching a requested multimedia data in the client cache of each client device when an original of the requested multimedia data does not exist in said each client device.
